# Europäisches Patentamt

# European Patent Office

# Office européen des brevets

(19)

(11) Veröffentlichungsnummer : **0 173 403 B1**

(12) **EUROPÄISCHE PATENTSCHRIFT**

(45) Veröffentlichungstag der Patentschrift :
28.09.88

(51) Int. Cl.⁴ : **B 01 D 53/34**, B 01 D 53/30, G 05 D 21/00

(21) Anmeldenummer : **85201342.4**

(22) Anmeldetag : **22.08.85**

(54) Regelverfahren für Sorptionsmittel.

(30) Priorität : 29.08.84 DE 3431662

(43) Veröffentlichungstag der Anmeldung :
05.03.86 Patentblatt 86/10

(45) Bekanntmachung des Hinweises auf die Patenterteilung : 28.09.88 Patentblatt 88/39

(84) Benannte Vertragsstaaten :
AT CH DE GB IT LI

(56) Entgegenhaltungen :
EP-A- 0 104 335
DE-A- 2 159 186
DE-A- 3 326 832
FR-A- 2 401 691
US-A- 4 322 224

(73) Patentinhaber : METALLGESELLSCHAFT AG
Reuterweg 14 Postfach 3724
D-6000 Frankfurt/M.1 (DE)

(72) Erfinder : Graubner, Hans Joachim
Rother Weingartenweg 48
D-6232 Bad Soden 2 (DE)
Erfinder : Gebhardt, Hans Joachim
Bonhoefferstrasse 38
D-6457 Maintal 1 (DE)

(74) Vertreter : Rieger, Harald, Dr.
Reuterweg 14
D-6000 Frankfurt am Main (DE)

Jouve, 18, rue St-Denis, 75001 Paris, France

**Beschreibung**

Die Erfindung bezieht sich auf ein Verfahren zur Regelung der Sorptionsmittelmenge, die in einen Abgasstrom zur Sorption von HCl und $SO_2$ eingebracht wird.

Aus der EP-A-0 104 335 ist ein Verfahren mit zweistufiger Reaktionsmittelzugabe bekanntgeworden, bei dem die Menge des in der ersten Stufe zugegebenen Reaktionsmittels in Abhängigkeit von der Rauchgasmenge und der anfänglichen Schadgaskonzentration und die Menge des in der zweiten Stufe zugegebenen Reaktionsmittels durch die im gereinigten Gas noch enthaltene Schadgaskonzentration geregelt wird. Ein solches Verfahren ist — abgesehen von der aus wärmetechnischen Gründen erforderlichen zweistufigen Reaktionsmittelzugabe — verhältnismäßig kompliziert, weil zunächst eine getrennte Ermittlung der Schadgaskomponenten erfolgen muß. Da die Probennahme und Gasanalyse für die verschiedenen möglichen Schadgaskomponenten mit unterschiedlichem Zeitaufwand verbunden ist, ist das bekannte Verfahren zwangsläufig von der langsamsten Analyse abhängig, was regeltechnisch unbefriedigend, in vielen Fällen sogar unvertretbar ist, weil mit der Reaktionsmittelzugabe häufig nicht schnell genug auf die Änderung der Schadgaskonzentration reagiert werden kann. Infolgedessen besteht die Gefahr, daß die zulässigen Schadgas-Grenzwerte im Reingas zeitweilig überschritten werden.

Etwas Ähnliches gilt für das aus der DE-A-21 59 186 bekannte Verfahren, bei dem die Abgasmenge und die Konzentration einer toxischen Komponente « für die Zulieferung der Reagenzlösung zu den Sprühmitteln nach Einstellung des Verhältnisses zwischen Wasser und Reagenz » maßgebend sind. Wird tatsächlich nur eine toxische Komponente gemessen, so ist das Verfahren für Abgase mit zwei oder mehr verschiedenen Schadgasen nicht anwendbar, zumindest aber sehr ungenau, wenn mit Schwankungen der einzelnen Komponenten gerechnet werden muß. Wenn aber alle relevanten Schadgaskomponenten gemessen werden, ergeben sich hier die gleichen Nachteile wie bei der EP-A-0 104 335.

Regelprobleme dieser Art bereiten vor allem bei Müllverbrennungsanlagen erhebliche Schwierigkeiten, weil der anfallende Müll hinsichtlich Zusammensetzung, Heizwert und Schadstoffanteil starken Schwankungen unterliegt. Dementsprechend muß mit erheblich und schnell veränderten Abgasparametern gerechnet und zur Einhaltung vorgegebener Emissionswerte ein umfangreiches Meß- und Regelsystem vorgesehen werden.

Wenn jedoch ein solches System zu aufwendig ist, kann die Wirtschaftlichkeit der Müllverbrennung in Frage gestellt, zumindest aber stark eingeschränkt werden, was entweder zu Lasten der Allgemeinheit geht oder aber den Wunsch nach anderweitiger, langfristig möglicherweise unsicherer oder nachteiliger Müllbeseitigung aufkommen lassen kann.

Es besteht somit die Aufgabe, ein Regelverfahren der eingangs beschriebenen Art anzugeben, bei dem mit vertretbarem Aufwand die in einen Abgasstrom eingebrachte Sorptionsmittelmenge in einfacher Weise an den sich ständig stark ändernden Bedarf angepaßt werden kann, ohne daß Emissionsgrenzwerte überschritten werden oder eine nennenswerte Überdosierung in Kauf genommen werden muß.

Diese Aufgabe wird erfindungsgemäß dadurch gelöst, daß der Sollwert der Sorptionsmitteldosierung anhand des HCl-Gehaltes und der Abgasmenge berechnet wird, daß der so ermittelte Sollwert noch mit einem von der Temperatur im Reingas abhängigen Stöchiometriewert korrigiert wird und daß als weitere Korrektur der $SO_2$-Gehalt im Abgas aufgeschaltet wird, wenn er einen vorgegebenen Grenzwert überschreitet.

Wenn die Reingastemperatur einen bestimmten Grenzwert unterschreitet, wird der Sollwert der Sorptionsmittelmenge in einfacher Weise direkt in Abhängigkeit von der Temperatur des Reingases eingestellt.

Zweckmäßigerweise wird als Sorptionsmittel Kalkmilch verwendet, deren Konzentration unabhängig von den Störgrößen des Abgasstromes auf einen bestimmten Wert eingestellt wird.

Außerdem ist vorgesehen, daß in den Abgasstrom zusätzlich Wasser eingesprüht wird, wenn die Temperatur im Reingas einen vorgegebenen Grenzwert überschreitet.

Mit dem erfindungsgemäßen Regelverfahren ist ein Weg gefunden worden, das Meß- und Regelsystem verhältnismäßig einfach und überschaubar zu gestalten, indem unter bestimmten Voraussetzungen jeweils mit einem Minimum an gemessenen Abgasparametern ein Sollwert für die Sorptionsmittelzugabe berechnet wird und trotzdem der gesamte Regelbereich überdeckt wird.

Tendenziell soll die Reaktion der Schadstoffe mit dem Sorptionsmittel bei möglichst tiefen Temperaturen stattfinden, wobei jedoch Taupunktunterschreitungen vermieden werden müssen. Daß der Taupunkt seinerseits durch die Schadstoffabtrennung gesenkt werden kann, soll hier nur am Rande erwähnt werden.

Bedeutsamer ist, daß mit der Sorptionsmittelzugabe — insbesondere wenn das Sorptionsmittel in einer im Abgasstrom verdampfenden Flüssigkeit suspendiert ist — eine Absenkung der Temperatur verbunden ist, was im Sinne einer Verbesserung des Wirkungsgrades der Schadstoffabtrennung wirkt.

Für die Korrektur des Sollwertes anhand des temperaturabhängigen Stöchiometriewertes ist davon auszugehen, daß dieser Wert als Kurve im fraglichen Temperaturbereich ermittelt werden kann und so in das Regelsystem eingegeben wird. Eine solche Kurve wird wegen der verbesserten Reaktionsbedingungen bei niedrigeren Temperaturen nicht linear mit der Temperatur verlaufen, sondern mit zunehmender Temperatur stärker ansteigen. Im einzelnen ist die Kurve selbstverständlich auch noch von Anlageparametern und der Charakteristik des Regelsystems abhängig, was bei einer konkreten Anlage aber ohne Schwierigkeiten berücksichtigt werden kann. Die Aufschaltung des $SO_2$-Wertes berücksichtigt, daß der HCl-Gehalt in Verbindung mit der Abgasmenge und der Abgastemperatur u. U. den Sorptionsmittelbedarf nur bis zu einer bestimmten Grenze deutlich genug wiedergibt.

Auf der anderen Seite kann die Bestimmung des Sollwertes vereinfacht werden, wenn die Temperatur des Reingases einen bestimmten Wert unterschreitet. Daß die Konzentration des in Form von Kalkmilch zugegebenen Sorptionsmittels konstant gehalten wird, ist in Anbetracht der Tatsache, daß gerade in solchen Fällen auch die Abgastemperatur beeinflußt wird, nicht selbstverständlich. Man könnte sich nämlich vorstellen, den Sorptionsmittelbedarf auch über eine Änderung der Kalkmilchkonzentration auszuregeln. Dies würde das System aber erheblich komplizieren und wäre mit der Forderung nach einer möglichst wirtschaftlichen Lösung nicht vereinbar.

Wenn jedoch wegen zu geringer Schadstoffgehalte die Zugabe von Sorptionsmitteln so weit gedrosselt wird, daß die Reingastemperatur wegen zu geringer eingedüster Flüssigkeitsmenge einen vorgegebenen Grenzwert überschreitet, kann zusätzlich Wasser eingesprüht werden, um die Abgastemperatur niedrig zu halten und die Schadstoff-Sorptionsmittel-Reaktion zu optimieren. Dadurch wird letztlich Sorptionsmittel gespart und die angestrebte wirtschaftliche Fahrweise erreicht.

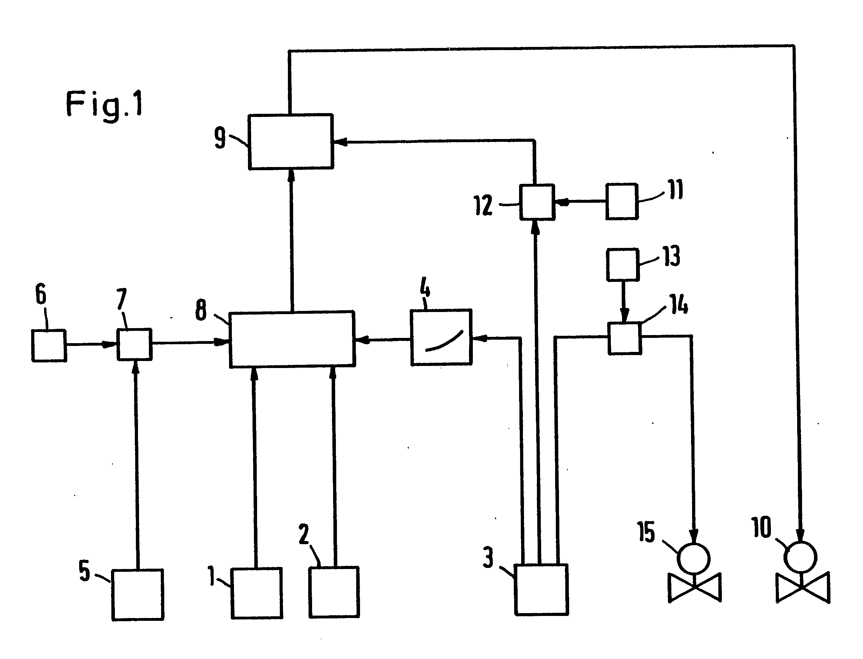

Weitere Einzelheiten und Vorteile des Erfindungsgedankens werden anhand des Schaltbildes der Figur 1 erläutert.

Mit 1 ist ein Meßgerät für den HCl-Wert bezeichnet, das ein im Rechner 8 verarbeitbares Signal liefert. Die Abgasmenge wird mit dem Gerät 2 gemessen und ebenfalls in den Rechner 8 eingegeben. Außerdem wird normalerweise noch ein Stöchiometriewert berücksichtigt, in dem das bei 3 gemessene und im Gerät 4 anhand der eingegebenen Kurve gewandelte Temperatursignal dem Rechner 8 zugeleitet wird. Außerdem wird der $SO_2$-Wert bei 5 gemessen und im Gerät 7 ständig mit einem im Gerät 6 fest eingestellten Grenzwert verglichen. Überschreitet der $SO_2$-Gehalt den Grenzwert, wird er als Korrektur auf dem Rechner 8 aufgeschaltet. Der daraus berechnete Wert erscheint im Gerät 9 als Sollwert und regelt die über Ventil 10 erfolgende Sorptionsmittelzugabe.

Unterschreitet die Reingastemperatur einen im Gerät 11 eingestellten und im Gerät 12 ständig verglichenen Grenzwert, dann wird der Rechner 8 übersprungen und der Sollwert für die Sorptionsmittelzugabe in 9 direkt in Abhängigkeit von der Reingastemperatur gebildet.

Schließlich ist über Ventil 15 noch eine Eindüsung von Wasser in den Abgasstrom vorgesehen, wenn die Reingastemperatur einen im Gerät 13 vorgegebenen und im Gerät 14 ständig verglichenen oberen Grenzwert überschreitet.

## Patentansprüche

1. Verfahren zur Regelung der Sorptionsmittelmenge, die in einen Abgasstrom zur Sorption von HCl und $SO_2$ eingebracht wird, dadurch gekennzeichnet, daß der Sollwert der Sorptionsmitteldosierung anhand des HCl-Gehaltes und der Abgasmenge berechnet wird, daß der so ermittelte Sollwert noch mit einem von der Temperatur im Reingas abhängigen Stöchiometriewert korrigiert wird und daß als weitere Korrektur der $SO_2$-Gehalt im Abgas aufgeschaltet wird, wenn er einen vorgegebenen Grenzwert überschreitet.

2. Verfahren nach Anspruch 1, dadurch gekennzeichnet, daß der Sollwert der Sorptionsmittelmenge nur noch nach der Temperatur des Reingases berechnet wird, wenn diese einen vorgegebenen Grenzwert unterschreitet.

3. Verfahren nach Anspruch 1 oder 2, dadurch gekennzeichnet, daß das Sorptionsmittel aus Kalkmilch besteht, deren Konzentration unabhängig von den Störgrößen des Abgasstromes auf einen bestimmten Wert eingeregelt wird.

4. Verfahren nach Anspruch 3, dadurch gekennzeichnet, daß in den Abgasstrom zusätzlich Wasser eingesprüht wird, wenn die Temperatur im Reingas einen vorgegebenen Grenzwert überschreitet.

## Claims

1. Method for controlling the quantity of sorbent which is fed into a stream of waste gas for sorption of HCl and $SO_2$, characterised in that the desired value of the sorbent dosaging is calculated using the HCl content and the quantity of waste gas, that the desired value thus determined is corrected further by a stoichiometric value dependent on the temperature in the pure gas, and that, as a further correction, the $SO_2$ content in the waste gas is brought in if it exceeds a predetermined limit value.

2. Method according to Claim 1, characterised in that the desired value of the quantity of sorbent is only calculated according to the temperature of the pure gas when the latter falls below a predetermined limit value.

3. Method according to Claim 1 or 2, characterised in that the sorbent consists of milk of lime, the concentration of which is set to a determined value independent of the disturbances of the stream of waste gas.

4. Method according to Claim 3, characterised in that in addition water is sprayed into the stream of waste gas if the temperature in the pure gas exceeds a predetermined limit value.

## Revendications

1. Procédé de réglage de la quantité d'agent de sorption qui est introduite dans un courant de gaz effluent pour la sorption de HCl et de SO$_2$, caractérisé en ce qu'il consiste à calculer la valeur de consigne du dosage de l'agent de sorption au moyen de la teneur en HCl et de la quantité du gaz effluent, à corriger la valeur de consigne ainsi obtenue par une valeur de stoechiométrie dépendant de la température du gaz pur, et à mettre en oeuvre, comme autre correction, la teneur en SO$_2$ du gaz effluent quand elle dépasse une valeur limite prescrite.

2. Procédé suivant la revendication 1, caractérisé en ce qu'il consiste à calculer la valeur de consigne de la quantité d'agent de sorption en fonction de la température du gaz pur, seulement quand celle-ci est devenue inférieure à une valeur limite prescrite.

3. Procédé suivant la revendication 1 ou 2, caractérisé en ce que l'agent de sorption consiste en lait de chaux et le procédé consiste à en régler la concentration à une valeur déterminée, indépendamment des grandeurs perturbant le courant d'effluent gazeux.

4. Procédé suivant la revendication 3, caractérisé en ce qu'il consiste à injecter en outre de l'eau dans le courant d'effluent gazeux, quand la température du gaz pur dépasse une valeur limite prescrite.

Fig.1